# EUROPEAN PATENT SPECIFICATION

(11) **EP 3 115 282 B1**
(45) Date of publication and mention of the grant of the patent: **19.12.2018**
(21) Application number: 15175404.1
(22) Date of filing: 06.07.2015
(51) Int. Cl.: B62D 35/00, E05C 3/34, E05B 63/14, E05B 77/38, E05B 83/22, E05B 15/00, E05C 3/14

(54) **LOCKING MECHANISM FOR A SIDE SKIRT**
VERSCHLUSSMECHANISMUS FÜR EINE SEITENBLENDE
MÉCANISME DE VERROUILLAGE POUR UNE JUPE LATÉRALE

(43) Date of publication of application: 11.01.2017
(73) Proprietor: Ford Otomotiv Sanayi Anonim Sirketi, 34885 Istanbul (TR); Ford Global Technologies, LLC, Dearborn, MI 48126 (US)
(72) Inventor: AÇIKEL, Tamer, Suadiye-Kadiköy / Istanbul (TR); FIDAN, Ümit, Tuzla / Istanbul (TR); METINOGLU, Pars Batuhan, Avcilar / Istanbul (TR); KELES, Ugur, Bayrampasa / Istanbul (TR)
(74) Representative: Illing, Rolf

(56) References cited:
- JP-A- 2013 119 302
- US-A1- 2008 129 079
- US-A1- 2014 028 055
- US-A1- 2015 069 784

## Description

The invention relates to a locking mechanism for a side skirt of a vehicle. Further, the invention relates to a side skirt with such a locking mechanism and a vehicle with such a side skirt.

A locking mechanism of a side skirt of a vehicle uses a simple extension cord lock mechanism which is mounted on the side skirt mount bracket. To unlock a user had to pull the extension cord to himself and for locking the side skirt panel he had to be pushed forward and down.

However, such an extension cord mechanism needed much effort and strength. Also since the cord is exposed external effects it could be easily harmed. Further, the mechanism made squeak noises when unlocking.

US 2014 / 0028055 A1 discloses a side skirt mounting apparatus. The apparatus according to US 2014 / 0028055 A1 includes a side skirt that may be installed to be supported by a one-touch locker in an upper portion thereof and a hinge in a lower portion thereof. The locker includes an upper bracket, a lower bracket, a skirt frame to which the upper bracket and the lower bracket may be engaged, a shaft installed to slideably penetrate the upper and lower brackets and to be selectively inserted into a hole formed to a side skirt bracket, and an elastic member mounted on an outer circumference of the shaft between the upper and lower brackets to elastically support the shaft.

CN 202847817 U discloses a lateral skirt board locking mechanism. The lateral skirt board locking mechanism comprises a lateral skirt board support, a lateral skirt board connection frame, a lateral skirt board assembling frame, clamping hook members, elastic devices, a hasp and a hook member. The lateral skirt board connection frame is connected with the lateral skirt board support through the hasp and the hook member for providing locking force. The middle portion of the lateral skirt board support is mutually clamped with a first elastic device in the middle of the skirt board assembling frame through a first clamping hook member for providing supporting force, and simultaneously the first elastic device has elasticity and can have buffering effect on contacting of the lateral skirt board support and the first elastic device. The bottom of the lateral skirt board support is clamped with a second elastic device at the bottom of the lateral skirt board assembling frame to provide reverse tension, and simultaneously the second elastic device has elasticity and can have buffering effect on contacting of the lateral skirt board support and the second elastic device to finally achieve locking of the lateral skirt board device.

US 2008 / 129079 A1 discloses a detachable side fairing for a vehicle in one form comprising a panel body that can include steps. An access opening is defined by the panel body and is opened and closed by a door, such as the riser of a step, to allow access to the rear of the panel. A latch actuator can be accessed through the access opening for use in operating a latch to allow movement of the panel body away from the vehicle. The latch actuator comprises first and second actuators comprising respective first and second elongated handles that each actuates an associated latch to release the panel body. The handles are configured to prevent closing of the door when the actuators have not been moved to a position that completes the latching of the panel body to the vehicle.

However, there are no safety measurements in the mechanisms according to the prior art. This made it possible for the side skirt panel to come loose from the lock in driving position. Since the side skirt panel is big it could cause risky and life threatening situations.

It is therefore an object of the invention to improve the lock quality of such a locking mechanism.

A locking mechanism for a side skirt of a vehicle according to the invention comprises a main hook member and a secondary hook member. The locking mechanism allows a movement of the side skirt from a first position to an second position if the main hook member and a main counterpart member and the secondary hook member and the secondary counterpart member are each not in engagement, wherein the locking mechanism fix the side skirt in the first position, if the main hook member is in engagement with the main counterpart member and/or the secondary hook member is in engagement with the secondary counterpart member. Further, the secondary hook member comprises a coupling hook member and the main hook member comprises a coupling counterpart member, wherein the coupling hook member could be brought in engagement with the coupling counterpart member to transfer a force to the main hook member to move the main hook member to disengage the main hook member from the main counterpart member. To unlock the locking mechanism in a first step a movement of the secondary hook member disengages the secondary hook member from the secondary counterpart member, wherein in a second step the coupling hook member abuts on the coupling counterpart member and transfers force to move the main hook member to disengage the main hook member from the main counterpart member. The main hook member and the secondary hook member provides a two-step locking mechanism improving the lock quality and eliminating the squeak sound as well as user comfort by improving the lock handle. Due to having a safety secondary lock until any force required to unlock is applied the lock mechanism continue to work. This eliminates the health and environment risk of the side skirt panel while driving.

In a preferred embodiment the locking mechanism comprises a handle to disengage the main hook member from the main counterpart member and to disengage the secondary hook member from the secondary counterpart member. Thus, the lock handle and locking mechanism can be altered to be used commonly through the lock positions. This in turn increases user satisfaction.

In a preferred embodiment the handle is pivotable mounted on a pin. Thus, turning the handle about an axis of the pin allow the locking mechanism to have small dimension and makes it easy for a user to apply the necessary amount of power to bring the main hook member and the secondary hook member out of engagement.

In a preferred embodiment a main spring is provided pressing the main hock in engagement with the main counterpart member. Thus, the lock safety is increased since the force provided by the main spring maintains the engagement of the main hook member and the main counterpart member.

In a preferred embodiment a secondary spring is provided pressing the secondary hook member in engagement with the secondary counterpart member. Thus, the lock safety is increased since the force provided by the secondary spring maintains the engagement of the secondary hook member and the secondary counterpart member.

In a preferred embodiment the main hook member and/or the secondary hook member comprise a startup-slope. When returning the side skirt from the second position to the first position the respective start up-slopes will cause the respective counterpart members to move away to allow the main hook member and/or secondary hook member to pass the respective counterpart members. Thus, the locking mechanism is easy to handle.

Further, the invention relates to a side skirt with such a locking mechanism and a vehicle with such side skirt.

An example of the invention will now be described with reference to the following drawings:
- Fig. 1: shows a side skirt in a first position,
- Fig. 2: shows the side skirt of Fig. 1 in a second position,
- Fig. 3: shows the locking mechanism in an exploded view,
- Fig. 4: shows the locking mechanism in an assembled view,
- Fig. 5: show the locking mechanism of Fig. 4 with the main hook member and the secondary hook member in a first position,
- Fig. 6: shows the locking mechanism of Fig. 4 with the main hook member and the secondary hook member in a second position.
- Fig. 7: shows the locking mechanism of Fig. 4 with the main hook member and the secondary hook member in a third position.

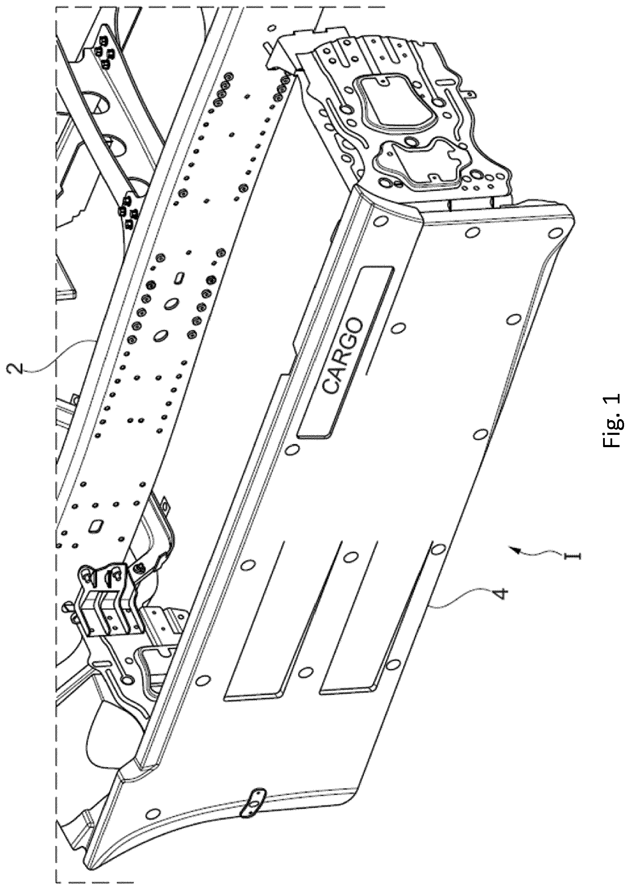

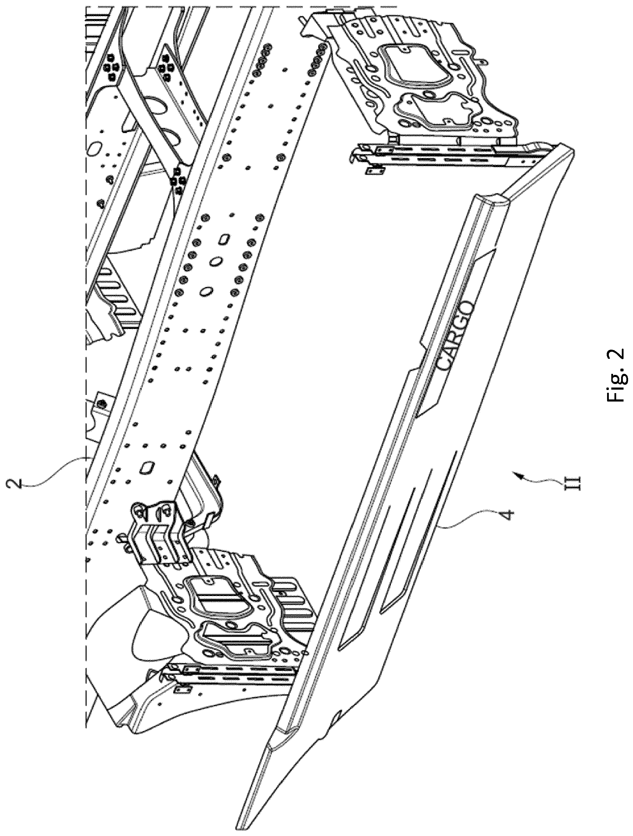

Fig. 1 and 2 are showing a vehicle 2 with a side skirt 4.

The vehicle 2 may be a motor vehicle such as a truck, also called a lorry, designed to transport cargo, or a tractor unit for pulling semi-trailers. Further, the vehicle 2 may be an unpowered vehicle towed by a powered vehicle for the transport of goods and materials.

The side skirt 4 or trailer skirt is a device affixed to the underside of the vehicle 2 for the purpose of reducing aerodynamic drag caused by air turbulence.

The side skirt 4 is a panel affixed to the lower side edge of the vehicle 2 running most of the length of the vehicle 2 and filling the gap between the forward and rear axles. The side skirt 4 is typically constructed of aluminum, plastic, or fiberglass, with plastic the most resistant to damage from side or bottom impacts.

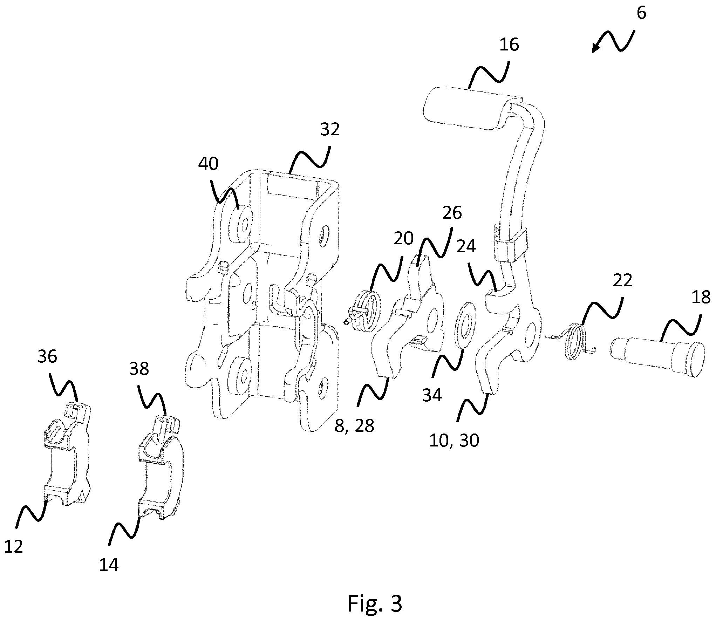

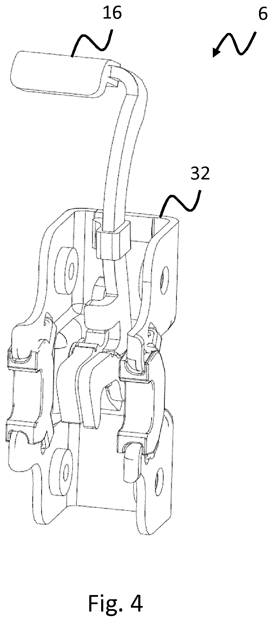

The side skirt 4 is pivotable attached to the vehicle 2 and can be moved from a first position I, e.g. a closed or driving position (see Fig. 1) to a second position II, e.g. an open position (see Fig. 2). To fix the side skirt in the first position I and to prevent the side skirt 4 from loosening a locking mechanism is provided (not shown in Fig. 1 and 2) which will be explained with reference to Fig. 3 and 4.

Fig. 3 and 4 show the locking mechanism 6.

The locking mechanism 6 comprises in a preferred embodiment a main hook member 8, a secondary hook member 10, a main counterpart member 12, a secondary counterpart member 14, a handle 16, a pin 18, a main spring 20, a secondary spring 22, a coupling hook member 24, a coupling counterpart member 26, a mount bracket 32 and a washer 34.

The mount bracket 32 comprises a welded nut 40 to fix at the vehicle 2 with a welded nut 40, and comprises further bores through which the pin 18 extends. The pin 18 carries the main hook member 8, the secondary hook member 10, the main spring 20, the secondary spring 22, and the washer 34 wherein the main hook member 8 and the secondary hook member 10 are pivotably mounted on the pin 18 to pivot around longitudinal axis of the pin 18.

The washer 34 is arranged on the pin 18 between the main hook member 8 and the secondary hook member 10.

The main spring 20 is fixed with one of its ends at the mount bracket 32 and the other end is in engagement with the main hook member 8. Therefore, spring tension of the main spring 20 is transferred to the main hook member 8.

The secondary spring 22 is fixed with one of its ends at the mount bracket 32 and the other end is in engagement with the secondary hook member 10. Therefore, spring tension of the secondary spring 22 is transferred to the secondary hook member 10.

The main hook member 8 can be brought in engagement with the main counterpart member 12 to fix the side skirt 4 in the first position I and can be disengaged to allow a movement of the side skirt 2 from the first position I to the second position II.

The handle 16 is fixed at the secondary hook member 10 to allow a user to move the secondary hook member 10 easily.

The secondary hook member 10 comprises a coupling hook member 24 and the main hook member 8 comprises a coupling counterpart member 26. The coupling hook member 24 could be brought in engagement with the coupling counterpart member 26. When in engagement, a force is transferred from the handle 16 to the main hook member 8 to disengage the main hook member 8 from the main counterpart member 12.

The main hook member 8 and the secondary hook member 10 comprise each a respective start up-slope 28, 30. When returning the side skirt 4 from the second position II to the first position I the respective start up-slopes 28, 30 will cause the main counterpart member 12 and the secondary counterpart member 14 to move away to allow the main hook member 8 and secondary hook member 10 to pass its respective counterpart members 12, 14.

To reduce impacts caused by abutting of the main hook member 8 on the main counterpart member 12 the main counterpart member 12 is provided with a rubber part at its tip. Additionally, the secondary counterpart member 14 is provided with a rubber part at its tip to reduce such impacts, too.

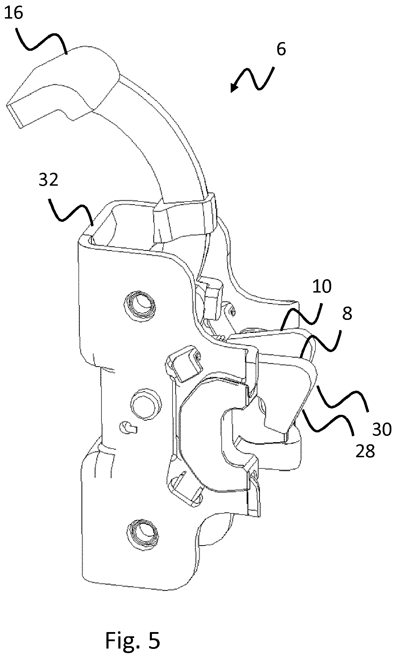

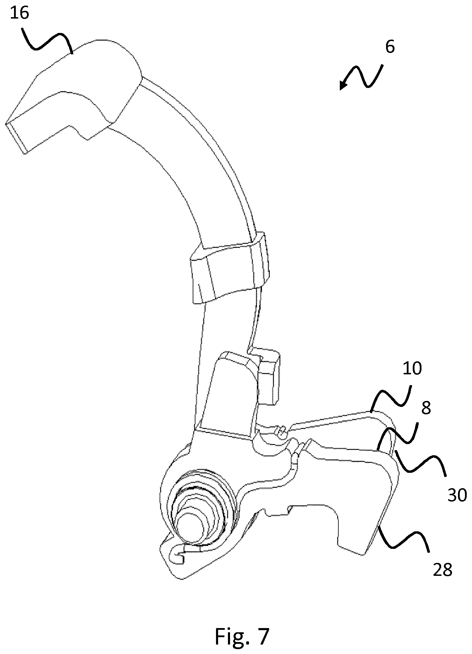

Fig. 5, 6 and 7 show the locking mechanism 6 without the main counterpart member 12 and the secondary counterpart member 14, wherein Fig. 7 shows the locking mechanism 6 without the mount bracket 32.

Fig. 5 shows a position in which the main hook member 8 is in engagement with the main counterpart member 12 and the secondary hook member 10 is in engagement with the secondary counterpart member 14. Accordingly, the main hook member 8 and the secondary hook member 10 fix the side skirt 4 in the first position I (see Fig. 1).

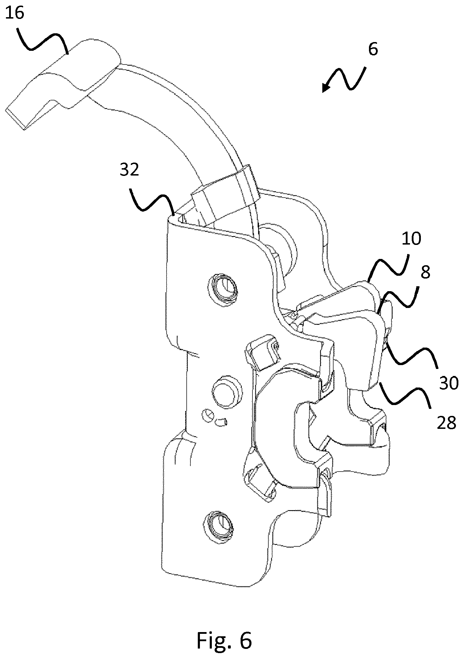

To unlock the locking mechanism 6 a user pulls the handle 16 in a direction D. This cause in a first step a movement of the secondary hook member 10, e.g. a lifting as shown in Fig. 6, to disengage the secondary hook member 10 from the secondary counterpart member 14.

Further pulling the handle 16 in the direction D cause in a second step a movement of the main hook member 8, since the coupling hook member 24 abuts on the coupling counterpart member 26 and transfers force from the handle 16 to the main hook member 8. As a result the main hook member 8 is moved, e.g. lifted as shown in Fig. 7, to disengage the main hook member 8 from the main counterpart member 12.

After the second step the locking mechanism 6 is unlock and a user can pivot the side skirt 4 from the first position I to the second position II.

When the side skirt 4 is returned from the second position I to the first position I first the main counterpart member 12 will abut on the main hook member 8, followed by the secondary counterpart member 14 abutting on the secondary hook member 10.

The shocks caused by the abutting of the main counterpart member 12 and the secondary counterpart member 14 on their respective hook members 8, 10 are absorbed by the rubber parts 36, 38 at their respective tips. Further the respective startup-slopes 28, 30 of the main hook member 8 and the secondary hook member 10 will cause the respective counterpart members 12, 14 to move away to allow the main hook member 10 and the secondary hook member 12 to pass their respective counterpart members 12, 14 to make it easier for the user to re-lock the locking mechanism 6.

### Reference Numerals

- 2: vehicle
- 4: side skirt
- 6: locking mechanism
- 8: main hook member
- 10: secondary hook member
- 12: main counterpart member
- 14: secondary counterpart member
- 16: handle
- 18: pin
- 20: main spring
- 22: secondary spring
- 24: coupling hook member
- 26: coupling counterpart member
- 28: startup-slope
- 30: startup-slope
- 32: mount bracket
- 34: washer
- 36: rubber part
- 38: rubber part
- 40: weld nut
- D: direction

## Claims

1. Locking mechanism (6) for a side skirt (4) of a vehicle (2), wherein the locking mechanism (6) comprises a main hook member (8) and a secondary hook member (10), wherein the locking mechanism (6) allows a movement of the side skirt (4) from a first position (I) to an second position (II) if the main hook member (8) and a main counterpart member (12) and the secondary hook member (10) and a secondary counterpart member (14) are each not in engagement, and wherein the locking mechanism (6) fix the side skirt (4) in the first position (I), if the main hook member (8) is in engagement with the main counterpart member (12) and/or the secondary hook member (10) is in engagement with the secondary counterpart member (14), wherein the secondary hook member (10) comprises a coupling hook member (24) and the main hook member (8) comprises a coupling counterpart member (26), wherein the coupling hook member (24) could be brought in engagement with the coupling counterpart member (26) to transfer a force to the main hook member (8) to move the main hook member (8) to disengage the main hook member (8) from the main counterpart member (12), wherein to unlock the locking mechanism (6) in a first step a movement of the secondary hook member (10) disengages the secondary hook member (10) from the secondary counterpart member (14), wherein in a second step the coupling hook member (24) abuts on the coupling counterpart member (26) and transfers force to move the main hook member (8) to disengage the main hook member (8) from the main counterpart member (12).

2. Locking mechanism (6) according to claim 1, wherein the locking mechanism (6) comprises a handle (16) to disengage the main hook member (8) from the main counterpart member (12) and disengage the secondary hook member (10) from the secondary counterpart member (12).

3. Locking mechanism (6) according to claim 2, wherein the handle (16) is pivotable mounted on a pin (18).

4. Locking mechanism (6) according to claim 1, 2 or 3, wherein a main spring (20) is provided pressing the main hook (8) in engagement with the main counterpart member (12).

5. Locking mechanism (6) according to one of the claims 1 to 4, wherein a secondary spring (22) is provided pressing the secondary hook member (10) in engagement with the secondary counterpart member (14).

6. Locking mechanism (6) according to one of the claims 1 to 5, wherein the main hook member (8) and/or the secondary hook member (10) comprise a startup-slope (28, 30).

7. Side skirt (4) with a locking mechanism (6) according to one of the claims 1 to 6.

8. Vehicle (2) with a side skirt (4) according to claim 7.

## Patentansprüche

1. Verschlussmechanismus (6) für eine Seitenblende (4) eines Fahrzeugs (2), wobei der Verschlussmechanismus (6) ein Haupthakenelement (8) und ein sekundäres Hakenelement (10) umfasst, wobei der Verschlussmechanismus (6) eine Bewegung der Seitenblende (4) von einer ersten Position (I) in eine zweite Position (II) gestattet, wenn das Haupthakenelement (8) und ein Hauptgegenstückelement (12) und das sekundäre Hakenelement (10) und ein sekundäres Gegenstückelement (14) sich jeweils nicht im Eingriff befinden, und wobei der Verschlussmechanismus (6) die Seitenblende (4) in der ersten Position (I) befestigt, wenn sich das Haupthakenelement (8) im Eingriff mit dem Hauptgegenstückelement (12) befindet und/oder das sekundäre Hakenelement (10) sich im Eingriff mit dem sekundären Gegenstückelement (14) befindet, wobei das sekundäre Hakenelement (10) ein Kopplungshakenelement (24) umfasst und das Haupthakenelement (8) ein Kopplungs-Gegenstückelement (26) umfasst, wobei das Kopplungshakenelement (24) in Eingriff mit dem Kopplungs-Gegenstückelement (26) gebracht werden könnte, um eine Kraft auf das Haupthakenelement (8) zu übertragen, um das Haupthakenelement (8) zu bewegen, um das Haupthakenelement (8) von dem Haupt-Gegenstückelement (12) zu lösen, wobei zum Entriegeln des Verschlussmechanismus (6) in einem ersten Schritt eine Bewegung des sekundären Hakenelements (10) das sekundäre Hakenelement (10) von dem sekundären Gegenstückelement (14) löst, wobei in einem zweiten Schritt dass Kopplungshakenelement (24) an das Kopplungs-Gegenstückelement (26) angrenzt und eine Kraft überträgt, um das Haupthakenelement (8) zu bewegen, um das Haupthakenelement (8) von dem Haupt-Gegenstückelement (12) zu lösen.

2. Verschlussmechanismus (6) nach Anspruch 1, wobei der Verschlussmechanismus (6) einen Griff (16) umfasst, um das Haupthakenelement (8) von dem Haupt-Gegenstückelement (12) zu lösen und das sekundäre Hakenelement (10) von dem sekundären Gegenstückelement (12) zu lösen.

3. Verschlussmechanismus (6) nach Anspruch 2, wobei der Griff (16) schwenkbar an einem Stift (18) montiert ist.

4. Verschlussmechanismus (6) nach Anspruch 1, 2 oder 3, wobei eine Hauptfeder (20) bereitgestellt ist, die den Haupthaken (8) in Eingriff mit dem Haupt-Gegenstückelement (12) drückt.

5. Verschlussmechanismus (6) nach einem der Ansprüche 1 bis 4, wobei eine sekundäre Feder (22) bereitgestellt ist, die das sekundäre Hakenelement (10) in Eingriff mit dem sekundären Gegenstückelement (14) drückt.

6. Verschlussmechanismus (6) nach einem der Ansprüche 1 bis 5, wobei das Haupthakenelement (8) und/oder das sekundäre Hakenelement (10) eine Anfangsneigung (28, 30) umfassen.

7. Seitenblende (4) mit einem Verschlussmechanismus (6) nach einem der Ansprüche 1 bis 6.

8. Fahrzeug (2) mit einer Seitenblende (4) nach Anspruch 7.

## Revendications

1. Mécanisme de verrouillage (6) pour une jupe latérale (4) d'un véhicule (2), le mécanisme de verrouillage (6) comprenant un élément de crochet principal (8) et un élément de crochet secondaire (10), le mécanisme de verrouillage (6) permettant un mouvement de la jupe latérale (4) d'une première position (I) à une seconde position (II) si l'élément de crochet principal (8) et un élément de contrepartie principal (12) et l'élément de crochet secondaire (10) et un élément de contrepartie secondaire (14) ne sont chacun pas en prise, et le mécanisme de verrouillage (6) fixant la jupe latérale (4) dans la première position (I), si l'élément de crochet principal (8) est en prise avec l'élément de contrepartie principal (12) et/ou l'élément de crochet secondaire (10) est en prise avec l'élément de contrepartie secondaire (14), l'élément de crochet secondaire (10) comprenant un élément de crochet d'accouplement (24) et l'élément de crochet principal (8) comprenant un élément de contrepartie d'accouplement (26), l'élément de crochet d'accouplement (24) pouvant être amené en prise avec l'élément de contrepartie d'accouplement (26) pour transférer une force à l'élément de crochet principal (8) pour déplacer l'élément de crochet principal (8) pour séparer l'élément de crochet principal (8) de l'élément de contrepartie principal (12), pour déverrouiller le mécanisme de verrouillage (6), dans une première étape, un mouvement de l'élément de crochet secondaire (10) séparant l'élément de crochet secondaire (10) de l'élément de contrepartie secondaire (14), dans une seconde étape, l'élément de crochet d'accouplement (24) venant en butée contre l'élément de contrepartie d'accouplement (26) et transmettant une force pour déplacer l'élément de crochet principal (8) pour séparer l'élément de crochet principal (8) de l'élément de contrepartie d'accouplement (12).

2. Mécanisme de verrouillage (6) selon la revendication 1, le mécanisme de verrouillage (6) comprenant une poignée (16) pour séparer l'élément de crochet principal (8) de l'élément de contrepartie principal (12) et séparer l'élément de crochet secondaire (10) de l'élément de contrepartie secondaire (12).

3. Mécanisme de verrouillage (6) selon la revendication 2, la poignée (16) étant montée pivotante sur un axe (18) .

4. Mécanisme de verrouillage (6) selon la revendication 1, 2 ou 3, un ressort principal (20) étant fourni appuyant sur le crochet principal (8) en prise avec l'élément de contrepartie principal (12).

5. Mécanisme de verrouillage (6) selon l'une des revendications 1 à 4, un ressort secondaire (22) étant fourni appuyant sur l'élément de crochet secondaire (10) en prise avec l'élément de contrepartie secondaire (14).

6. Mécanisme de verrouillage (6) selon l'une des revendications 1 à 5, l'élément de crochet principal (8) et/ou l'élément de crochet secondaire (10) comprenant une pente de démarrage (28, 30).

7. Jupe latérale (4) avec un mécanisme de verrouillage (6) selon l'une des revendications 1 à 6.

8. Véhicule (2) avec une jupe latérale (4) selon la revendication 7.
